# EUROPEAN PATENT SPECIFICATION

(11) **EP 2 789 978 B1**
(45) Date of publication and mention of the grant of the patent: **23.01.2019**
(21) Application number: 13189706.8
(22) Date of filing: 22.10.2013
(51) Int. Cl.: G01C 21/32

(54) **Navigation system and method for displaying photomap on navigation system**
Navigationssystem und Verfahren zur Anzeige einer Luftbildkarte auf dem Display des Navigationssystems
Système et procédé de navigation pour afficher une photomap sur une système de navigation

(30) Priority: 08.04.2013 KR 20130038343
(43) Date of publication of application: 15.10.2014
(73) Proprietor: Hyundai Mnsoft, Inc., Seoul 140-711 (KR)
(72) Inventor: Kim, Sang Hun, 140-711 Seoul (KR)
(74) Representative: Viering, Jentschura & Partner mbB Patent- und Rechtsanwälte

(56) References cited:
- EP-A1- 1 901 260
- GB-A- 2 411 558
- US-A1- 2005 052 472
- US-A1- 2005 171 688

## Description

### Related Applications

This application claims the benefit of Korean Patent Application No. 10-2013-0038343, filed on April 08, 2013.

### Field of the Invention

The present invention relates to a navigation system and a method for displaying a photomap on the navigation system. More specifically, the present invention relates to a navigation system and a method for displaying a photomap on the navigation system, adapted to compose object information of a numerical map and the photomap or remove vehicles from a road in the photomap when displaying the photomap on the navigation system.

### Background of the Invention

Currently, as the number of moving bodies such as a vehicle continues to increase, the traffic congestion becomes worse and worse. Further, since the increasing speed of the number of the moving bodies is becoming faster than that of the infrastructure such as road, there occur severe problems such as traffic congestion.

In such a situation, navigation systems are highlighted as one of the solutions to the traffic congestion. A navigation system receives a navigation message transmitted from satellites for GPS (Global Positioning System) to determine a current position of a moving body, matches the current position of the moving body to map data to display it on a screen of the navigation system, and searches for a driving route from the current position of the moving body to a destination. Further, the navigation system guides a user to drive a moving body along the searched driving route, whereby the user can make use of a road network given efficiently.

Typically, the map displayed on a screen in a navigation system is a numerical map, which displays roads and geographic features using digitized map data on the basis of 2D images, or models the geographic features in 3D images to display them so that a user feels more real.

Recently, images of driving route through the use of photomaps such as aerial photographs taken from aircrafts or satellite photographs taken from satellites are provided, so that it may be possible to precisely capture real road state and surrounding situation.

Nonetheless, since a photomap displays a real space via the aerial photograph or satellite photographs, in the course of providing a guidance along a searched driving route, vehicles on a road or disordered structures on a rooftop of a building alongside of the route are also displayed on the photomap, which may hinder an identification of a shape of the road or the building.

Related art of the disclosure of the present invention is disclosed in Korean Laid-Open Patent No. 10-2002-0047531, entitled "Method and apparatus for searching information of point of interest," published on September 5, 2002.

Further, US patent application publication US2005/052472A1 discloses a map display device, wherein a photographic map can be displayed in different modes. When it is determined that the photographic map is displayed in a combined map mode, a road line is displayed on a road of the photographic map at a display scale equal to or smaller than 100 m scales. At a scale larger than 100 m scales, information items that provide road information other than the road line are displayed on the photographic map. Since the road line is not displayed on the photographic map, the information items other than the road line are easily recognized.

Further, European patent application publication EP1901260A1 discloses a map information correcting apparatus, a map information correcting method, and a program capable of correcting the positional deviation of an object due to an error between different maps. In addition, said document provides an information providing apparatus and an information acquiring apparatus using the map information correcting apparatus. The information acquiring apparatus includes a positional information receiving unit that receives information on an object including information a position reference object close to an object that corresponds to a digital map data base A provided on an information provider side, a contour position specifying unit for specifying a contour position, a representative point extracting unit for extracting representative points from the contour position, and an internal shape correcting unit for executing a predetermined interpolation process, using positional information in the digital map database A and a digital map database B, to correct at least one of the position and shape of the object so as to be suitable for the second map.

Further, UK patent application publication GB2411558A discloses a car navigation device which displays a map by using colours from a first palette when the speed of the vehicle is below a predetermined value and from a second palette when travelling above this value. The contrast of the colours in the second palette is higher than those in the first palette. In this way features may be hidden when travelling at a higher speed and revealed when travelling at a low speed. The different colour palettes may also be selected depending on ambient sunlight or by user operation.

Further, US patent application publication US 2005/171688A1 discloses a travel direction designating unit which designates a travel direction of a travel lane where a subject vehicle travels, by using an image of a paint photographed by an in-vehicle camera. Further, a travel direction extracting unit extracts a travel direction in which the subject vehicle should travel in line with a route to a destination from the current position of the subject vehicle. Further, a determining unit determines whether the extracted travel direction in line with the route matches with the designated travel direction. It is thereby determined whether the subject vehicle travels towards a proper road.

### Summary of the Invention

The invention provides a method for displaying a photomap performed by a navigation system according to claim 1 and a navigation system according to claim 2. A further embodiment is described in the dependent claim. Further methods and systems are described in this document to facilitate implementation and use of the method and system according to the invention.

As described herein, the photomap may include an aerial photomap or a satellite photomap.

As described above, in the navigation system and the method for displaying a photomap on the navigation system in accordance with the present invention, the object information is extracted from the numerical map to compose the object information and the photomap or the vehicles are removed from the road in the photomap when displaying the resultant photomap on the navigation system. As a result, it is possible to improve visibility of the photomap for the guidance of a route.

### Brief Description of the Drawings

The above and other objects and features of the present invention will become apparent from the following description of the embodiments given in conjunction with the accompanying drawings, in which:
Fig. 1 is a block diagram of a navigation system in accordance with an embodiment of the present invention;
Fig. 2 illustrates an exemplary numerical map displayed on a navigation system in accordance with an embodiment of the present invention;
Fig. 3 illustrates an exemplary photomap displayed on a navigation system in accordance with an embodiment of the present invention;
Fig. 4 is a flowchart illustrating a method for displaying a photomap on a navigation system in accordance with the present invention;
Fig. 5 illustrates an exemplary photomap in which object information is composed on a basis of a method for displaying a photomap on a navigation system in accordance with the present invention;
Fig. 6 is a flowchart illustrating a method for displaying a photomap on a navigation system in accordance with the present invention; and
Fig. 7 illustrates an exemplary photomap from which a vehicle on a road is removed through the use of a method for displaying a photomap on a navigation system in accordance with the present invention.

### Detailed Description of the Embodiments

Hereinafter, an embodiment of a method for displaying a photomap on a navigation system in accordance with the present invention will be described with reference to the accompanying drawings. In referring to the drawings, thickness of lines and size of components shown in the drawings may be exaggerated for the purpose of descriptive clarity and for the sake of convenience. Further, the following terms are defined in consideration of the functions of the present invention, which may vary depending on the intentions of a user or an operator or practices. Therefore, the definition of such terms should be made on the basis of the disclosure throughout the present specification.

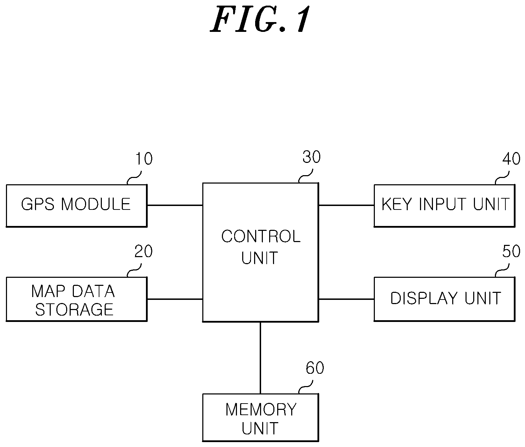

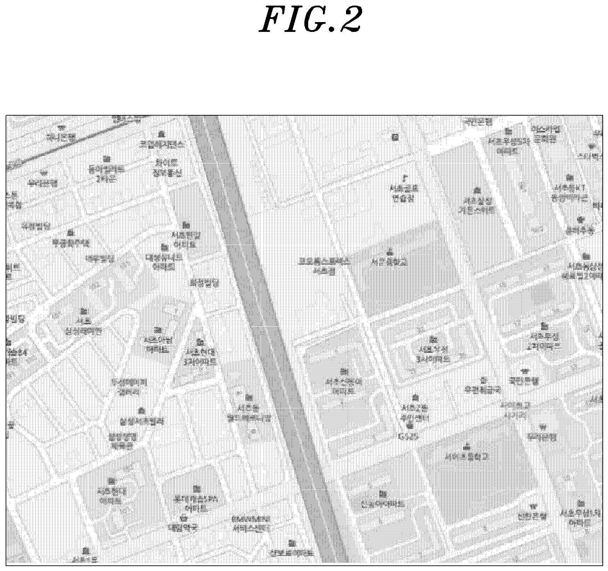

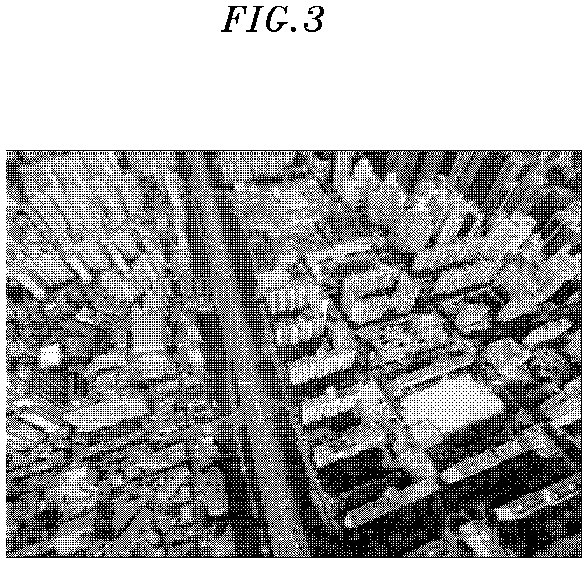

Fig. 1 is a block diagram of a navigation system in accordance with an embodiment of the present invention; Fig. 2 illustrates an exemplary numerical map displayed on a navigation system in accordance with an embodiment of the present invention; and Fig. 3 illustrates an exemplary photomap displayed in a navigation system in accordance with an embodiment of the present invention.

As illustrated in Fig. 1, the navigation system includes a GPS module 10, a map data storage 20, a memory unit 60, a key input unit 40, a control unit 30, and a display unit 50.

The GPS module 10 receives navigation messages from a plurality of GPS satellites (not shown) positioned over the earth and provides them to the control unit 30 so that its current position can be acquired.

The map data storage 20 stores map data of both a numerical map and a photomap used to guide a driving route of a moving body such as a vehicle (not shown) obtained after searching for the driving route.

As illustrated in Fig. 2, the numerical map refers to a map that displays roads and geographic features based on a 2D image through digitized map data or that realistically displays geographic features by modeling roads and geographic features in a 3D image.

The digitized map data contains shape information and attribute information of roads and geographic features, wherein the roads and geographic features are represented with different colors in accordance with the attributes thereof so that they can be easily distinguished for the identification.

Meanwhile, as illustrated in Fig. 3, the photomap refers to a map that provides an image of a driving route along a coordinate through an aerial photograph really taken from an aircraft to easily recognize real road states and surrounding situations. The photomap may include a satellite photomap displayed on the basis of satellite photographs taken from satellites.

The memory unit 60 stores various kinds of data including setting values to operate the navigation system and searched driving routes.

The key input unit 40 includes a plurality of function keys or buttons to receive from a user each setting value to operate the navigation system and a destination chosen to set a driving route.

The control unit 30 detects a current position of the moving body using the navigation messages received through the GPS module 10, and reads out map data stored in the map data storage 20 to display the current position of the moving body on the map.

When displaying the photomap, the control unit 30 also reads out the numerical map along with the photomap from the map data storage 20, matches a reference point and scale between the photomap and the numerical map, extracts the object information from the numerical map, and then composes the extracted object information and the photomap to display the resultant photomap.

In other words, the control unit 30 extracts shape and attribute information of roads and buildings, represents shapes of the roads and buildings on the photomap in accordance with the extracted shape information of the roads and buildings, and processes the roads and buildings in different colors in accordance with the extracted attribute information, thereby improving visibility of the roads and buildings displayed on the photomap when providing a guidance of a route.

Further, where the object information extracted from the numerical map is a road, the control unit 30 extracts lane components in a road area from the photomap and removes unwanted vehicles on the road by applying a road color to the road area except the lane components or by painting over the road area except the lane components with the road color. Consequently, it is possible to improve visibility of the road that is displayed on the photomap when providing a guidance of a route.

The term used herein "a road color" refers to a color of the road, which may be commonly a dark grey. However, the color of the road may vary depending on the type of the road. Accordingly, the road color disclosed in the embodiment may be defined by a color taking up most of the region extracted from the photomap or a color that is determined in advance on the basis of attribute of the road.

Also, the control unit 30 may apply the road color in a different color, based on the attribute information, i.e., depending on the type of roads such as national roads and highways.

For example, the road color may be differently represented as a variety of colors such as blue, green, yellow, orange, and red, depending on the speed limit of the roads. By way of example, the blue may be applied to highways, and the reddish color may be applied as the speed limit is slower.

In addition, it may be possible to treat the buildings with colors as defined in advance depending on the attributes of the buildings, for example, public offices with light blue, hospitals with white, kindergartens with yellow, schools with green and the like.

Furthermore, the control unit 30 searches a driving route from a current position to a destination on the basis of map data, which is stored in the map data storage 20, in response to the commands inputted through the key input unit 40, and guides a user along the searched driving route.

The display unit 50 displays various operation states of the components under the control of the control unit 30 and the driving route searched by the control unit 30, and the numerical map and photomap matched by the control unit 30.

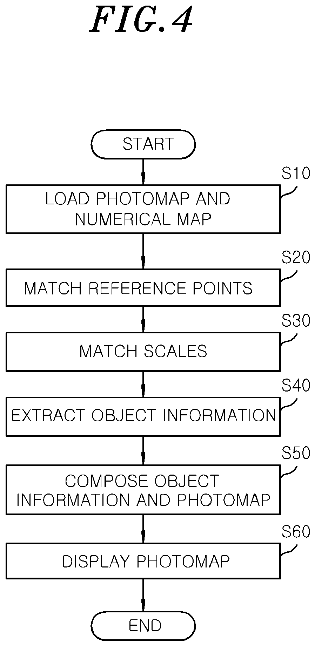

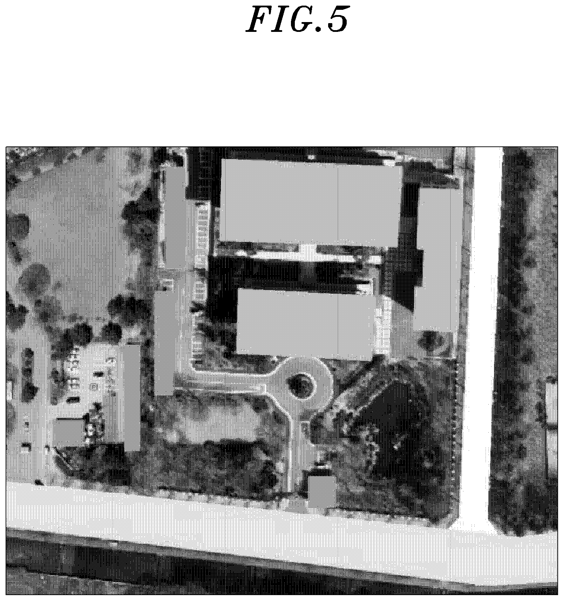

Fig. 4 is a flowchart illustrating a method for displaying a photomap on a navigation system in accordance with an embodiment of the present invention; and Fig. 5 is an exemplary photomap in which object information is composed on a basis of a method for displaying a photomap on a navigation system in accordance with an embodiment of the present invention.

As illustrated in Fig. 4, in a method for displaying a photomap on a navigation system in accordance with the present invention, the control unit 30 loads from the map data storage 20 a photomap and a numerical map of a current position detected through the GPS module 10 or position selected through the key input unit 40 in block S10.

In this case, the photomap may include an aerial photomap or a satellite photomap of which coordinates are established based on aerial photographs taken from an aircraft, or satellite photographs taken from satellites.

Subsequently, in block S20, the control unit 30 matches reference points between the photomap and the numerical map using the longitudinal and latitudinal coordinates of both maps. Here, the term "reference points" means base points used to match corresponding points of the photomap and the numerical map, which may be set in various positions and schemes depending on each system specification.

After matching the reference points of the numerical map and the photomap each other as described above, the control unit 30 adjusts a scale of the numerical map in line with a scale of the photomap to match both the maps in block S30.

That is, when the photomap is displayed in a large scale in the navigation system, the numerical map is also controlled in a large scale correspondingly to that of the photomap. In contrast, when the photomap is displayed in a small scale in the navigation system, the numerical map is also controlled in a small scale correspondingly to that of the photomap. Therefore, both maps can be matched to be displayed at the same size.

After matching the reference points and scales between the photomap and the numerical map, the control unit 30 extracts the object information of the roads and buildings from the numerical map in block S40.

In other words, the control unit 30 extracts shape information used for representing shapes of the roads and buildings and attribute information used for representing the type of the roads or attribute of the buildings from the numerical map when displaying the roads and buildings on the numerical map.

Next, in block S50, the control unit 30 shows the shapes of the roads and buildings on the photomap in accordance with the extracted shape information and then processes the roads and buildings in different colors in accordance with the attribute information in order for the composition of the shape information.

For example, it may be possible to display the respective roads in blue, green, yellow, orange, red, and the like depending on the speed limit of the roads. By way of example, the blue may be applied to highways, and the reddish color may be applied as the speed limit is slower.

In addition, it may be possible to treat the buildings with colors as defined in advance depending on the attributes of the buildings, for example, public offices with light blue, hospitals with white, kindergartens with yellow, schools with green and the like.

That is, as illustrated in Fig. 5, the control unit 30 extracts the object information of the roads and buildings and then composes the extracted object information and the photomap to display the resultant photomap as the moving body is moving in block S60.

As a result, when a moving body is moving, the shape of the roads and buildings may be viewed in relatively simple and may be easily distinguishable. Therefore, unlike an original disordered aerial photograph or satellite photograph, a user relatively easily identifies the roads and buildings in the photomap. In addition, the roads and buildings are processed in different colors in accordance with attribute information and thus, the user clearly recognizes what a building is and where a road is from the photomap.

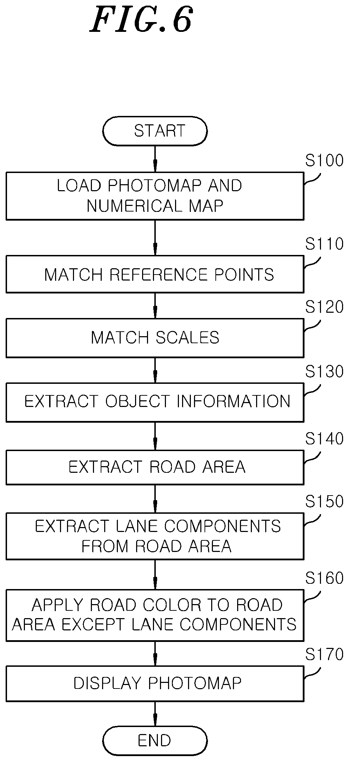

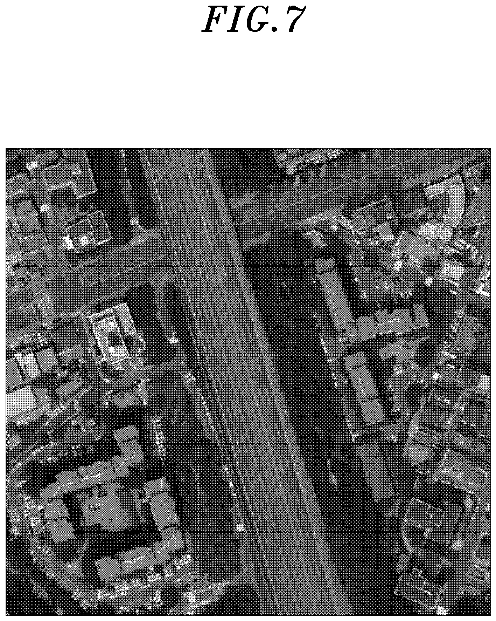

Fig. 6 is a flowchart illustrating a method for displaying a photomap on a navigation system in accordance with the present invention; and Fig. 7 illustrates an exemplary photomap from which a vehicle on a road is removed through the use of a method for displaying a photomap on a navigation system in accordance with the present invention.

As illustrated in Fig. 6, in a method for displaying a photomap on a navigation system in accordance with the present invention, the control unit 30 loads from the map data storage 20 a photomap and a numerical map at a current position detected through the GPS module 10 or at a position selected through the key input unit 40 in block S100.

In this case, the photomap may include an aerial photomap or a satellite photomap of which coordinates are established based on aerial photographs taken from an aircraft, or satellite photographs taken from satellites.

Subsequently, in block S110, the control unit 30 matches reference points between the photomap and the numerical map using the longitudinal and latitudinal coordinates of both maps. Here, the reference points mean base points used to match corresponding points of the photomap and the numerical map and display them, which may be set in various positions and schemes depending on each system specification.

After matching the reference points of the numerical map and the photomap each other, the control unit 30 adjusts a scale of the numerical map in line with a scale of the photomap to match both the maps in block S120.

That is, when the photomap is displayed in a large scale in the navigation system, the numerical map is also controlled in a large scale correspondingly to that of the photomap. In contrast, when the photomap is displayed in a small scale, the numerical map is also controlled in a small scale correspondingly to that of the photomap. Therefore, both maps can be matched to be displayed at the same size.

After the completion of the matching of the reference points and scales between the photomap and the numerical map, the control unit 30 extracts object information of the roads from the numerical map in block S130.

In other words, the control unit 30 extracts shape information used for representing the shapes of the roads and attribute information used for representing the type of the roads from the numerical map when displaying the roads on the numerical map.

Next, in block S140, the control unit 30 extracts a road area from the photomap based on the extracted object information.

In block S150, the control unit 30 performs an image processing on the extracted road area to extract lane components from the road area.

Thereafter, in block S160, the control unit 30 applies road color to the road area except the lane components to remove unwanted vehicles from the road displayed in the photomap.

The road color may be different depending on the type of the roads such as a national road, highway, etc.

For example, the road color may include such colors as blue, green, yellow, orange, and red, depending on the speed limit of the roads. By way of example, the blue may be applied to highways, and the reddish color may be applied as the speed limit is slower.

That is, as illustrated in Fig. 7, when the object information extracted from the numerical map is a road, the control unit 30 extracts the lane components from the road area in the photomap and removes unwanted vehicles from the road by applying the road color to the road area except the lane components, so that the resultant photomap from which the vehicles are removed is displayed as the moving body is moving in block S170.

As a result, when a moving body is moving, the photomap is displayed without the image of vehicles on a road therein. Therefore, unlike an original disordered aerial photograph or satellite photograph, a user relatively easily identifies the roads in the photomap. Further, the roads are processed in different colors for the display thereof in accordance with the attribute information of the roads, whereby the user clearly recognizes where a road is from the photomap.

As described above, in accordance with the method for displaying a photomap on the navigation system in accordance with the present invention, when the photomap is displayed in the navigation system, the object information is extracted from the numerical map to compose the object information and the photomap or the vehicles are removed from the road in the photomap. As a result, it is possible to improve visibility of the photomap for the guidance of a route.

While the present invention has been shown and described with respect to the embodiments illustrated with drawings, the embodiments are exemplary only and not limited thereto. It will be understood by those skilled in the art that it is possible to make various changes and equivalent embodiments based on the disclosure. Therefore, the scope of the present invention should be defined by the appended claims rather than by the foregoing embodiments.

## Claims

1. A method for displaying a photomap performed by a navigation system, the method comprising:
loading a photomap and a numerical map from a map data storage (S10);
matching reference points between the photomap and the numerical map (S20);
matching a scale of the numerical map with a scale of the photomap (S30);
extracting object information from the numerical map (S40); and
composing the object information and the photomap (S50),
wherein the object information comprises shape information and attribute information of roads and buildings, and
said composing the object information and the photomap (S50) comprises:
displaying shapes of the roads and the buildings on the photomap in accordance with the shape information; and
applying different colors to the roads and the buildings in accordance with the attribute information, wherein the method further comprises:
applying a road color to a road area in the photomap in accordance with the object information,
wherein said applying the road color to the road area in the photomap in accordance with the object information comprises:
extracting the road area from the photomap in accordance with the shape information;
applying the road color to the road area except the lane components thereby removing the image of vehicles on said road area; and
applying the road color to the road area in accordance with the attribute information.

2. A navigation system comprising:
a display unit (50);
a map data storage (20) configured to store a numerical map and a photomap; and
a control unit (30) configured to load the numerical map and the photomap from the map data storage, to match reference points and scales between the numerical map and the photomap, to extract object information from the numerical map, and to compose the extracted object information and the photomap,
wherein the object information comprises shape information and attribute information of roads and buildings, and
wherein the control unit (30) is configured to compose the extracted object information and the photomap by displaying shapes of the roads and the buildings on the photomap in accordance with the shape information of the roads and the buildings, and by applying different colors to the roads and the buildings in accordance with the attribute information,
wherein the control unit is further configured to apply a road color to a road area in the photomap in accordance with the object information in order to display a resultant photomap through the display unit,
wherein for applying a road color to a road area in the photomap in accordance with the object information the control unit is further configured to extract the road area from the photomap in accordance with the object information, and to apply the road color to the road area except the lane components to remove the image of vehicles on said road area,
wherein the control unit (30) is configured to apply the road color to the road area in accordance with the attribute information.

3. The navigation system of claim 2, wherein the photomap includes an aerial photomap or a satellite photomap.

## Patentansprüche

1. Ein Verfahren zum Anzeigen einer Fotokarte, welches durch ein Navigationssystem durchgeführt wird, das Verfahren aufweisend:
Laden einer Fotokarte und einer numerischen Karte aus einem Kartendatenspeicher (S10);
Abstimmen von Bezugspunkten zwischen der Fotokarte und der numerischen Karte (S20),
Abstimmen eines Maßstabs der numerischen Karte mit einem Maßstab der Fotokarte (S30),
Extrahieren einer Objektinformation aus der numerischen Karte (S40), und
Zusammensetzen der Objektinformation und der Fotokarte (S50),
wobei die Objektinformation Gestaltinformationen und Eigenschaftsinformationen von Straßen und Gebäuden aufweist, und
das Zusammensetzen der Objektinformation und der Fotokarte (S50) aufweist:
Anzeigen von Gestalten der Straßen und der Gebäude auf der Fotokarte gemäß den Gestaltinformationen, und
Anwenden unterschiedlicher Farben auf die Straßen und die Gebäude gemäß den Eigenschaftsinformationen,
wobei das Verfahren ferner aufweist:
Anwenden einer Straßenfarbe auf einen Straßenbereich in der Fotokarte gemäß der Objektinformation,
wobei das Anwenden der Straßenfarbe auf den Straßenbereich in der Fotokarte gemäß der Objektinformation aufweist:
Extrahieren des Straßenbereichs aus der Fotokarte gemäß der Gestaltinformation,
Anwenden der Straßenfarbe auf den Straßenbereich, mit Ausnahme der Fahrstreifenkomponenten, wodurch die Abbildung von Fahrzeugen auf dem Straßenbereich entfernt wird, und
Anwenden der Straßenfarbe auf den Straßenbereich gemäß der Eigenschaftsinformation .

2. Ein Navigationssystem, aufweisend:
eine Anzeigeeinheit (50),
einen Kartendatenspeicher (20), welcher dazu eingerichtet ist, eine numerische Karte und eine Fotokarte zu speichern, und
eine Steuereinheit (30), welche dazu eingerichtet ist, die numerische Karte und die Fotokarte aus dem Kartendatenspeicher zu laden, Bezugspunkte und Maßstäbe zwischen der numerischen Karte und der Fotokarte abzustimmen, eine Objektinformation aus der numerischen Karte zu extrahieren, und die extrahierte Objektinformation und die Fotokarte zusammenzusetzen,
wobei die Objektinformation Gestaltinformationen und Eigenschaftsinformationen von Straßen und Gebäuden aufweist, und
wobei die Steuereinheit (30) dazu eingerichtet ist, die extrahierte Objektinformation und die Fotokarte zusammenzusetzen durch Anzeigen von Gestalten der Straßen und der Gebäude auf der Fotokarte gemäß den Gestaltinformationen der Straßen und der Gebäude und durch Anwenden unterschiedlicher Farben auf die Straßen und die Gebäude gemäß den Eigenschaftsinformationen,
wobei die Steuereinheit ferner dazu eingerichtet ist, eine Straßenfarbe auf einen Straßenbereich in der Fotokarte gemäß der Objektinformation anzuwenden, um eine resultierende Fotokarte durch die Anzeigeeinheit anzuzeigen,
wobei die Steuereinheit ferner zum Anwenden einer Straßenfarbe auf einen Straßenbereich in der Fotokarte gemäß der Objektinformation dazu eingerichtet ist, den Straßenbereich aus der Fotokarte gemäß der Objektinformation zu extrahieren und die Straßenfarbe auf den Straßenbereich, mit Ausnahme der Fahrstreifenkomponenten, anzuwenden, um die Abbildung von Fahrzeugen auf dem Straßenbereich zu entfernen,
wobei die Steuereinheit (30) dazu eingerichtet ist, die Straßenfarbe auf den Straßenbereich gemäß der Eigenschaftsinformation anzuwenden.

3. Das Navigationssystem nach Anspruch 2, wobei die Fotokarte eine Luftfotokarte oder eine Satellitenfotokarte aufweist.

## Revendications

1. Procédé d'affichage d'une carte photographique mis en oeuvre par un système de navigation, le procédé comprenant les étapes ci-dessous consistant à :
charger une carte photographique et une carte numérique à partir d'une mémoire de données cartographiques (S10) ;
mettre en correspondance des points de référence entre la carte photographique et la carte numérique (S20) ;
mettre en correspondance une échelle de la carte numérique avec une échelle de la carte photographique (S30) ;
extraire des informations d'objets de la carte numérique (S40) ; et
composer les informations d'objets et la carte photographique (S50) ;
dans lequel les informations d'objets comprennent des informations de formes et des informations d'attributs de routes et de bâtiments ; et
dans lequel ladite étape de composition des informations d'objets et de la carte photographique (S50) comprend les étapes ci-dessous consistant à :
afficher des formes des routes et des bâtiments sur la carte photographique conformément aux informations de formes ; et
appliquer des couleurs différentes aux routes et aux bâtiments conformément aux informations d'attributs ;
dans lequel le procédé comprend en outre l'étape ci-dessous consistant à :
appliquer une couleur de route à une zone de route dans la carte photographique conformément aux informations d'objets,
dans lequel ladite étape d'application de la couleur de route à la zone de route dans la carte photographique conformément aux informations d'objets comprend les étapes ci-dessous consistant à :
extraire la zone de route de la carte photographique conformément aux informations de formes ;
appliquer la couleur de route à la zone de route, à l'exception des composantes de voie de circulation, ce qui permet d'éliminer par conséquent l'image de véhicules sur ladite zone de route ; et
appliquer la couleur de route à la zone de route conformément aux informations d'attributs.

2. Système de navigation comprenant :
une unité d'affichage (50) ;
une mémoire de données cartographiques (20) configurée de manière à stocker une carte numérique et une carte photographique ; et
une unité de commande (30) configurée de manière à charger la carte numérique et la carte photographique à partir de la mémoire de données cartographiques, à mettre en correspondance des points de référence et des échelles entre la carte numérique et la carte photographique, à extraire des informations d'objets de la carte numérique, et à composer les informations d'objets extraites et la carte photographique ;
dans lequel les informations d'objets comprennent des informations de formes et des informations d'attributs de routes et de bâtiments ; et
dans lequel l'unité de commande (30) est configurée de manière à composer les informations d'objets extraites et la carte photographique en affichant des formes des routes et des bâtiments sur la carte photographique conformément aux informations de formes des routes et des bâtiments, et en appliquant des couleurs différentes aux routes et aux bâtiments conformément aux informations d'attributs ;
dans lequel l'unité de commande est en outre configurée de manière à appliquer une couleur de route à une zone de route dans la carte photographique conformément aux informations d'objets afin d'afficher une carte photographique résultante à travers l'unité d'affichage ;
dans lequel, en vue d'appliquer une couleur de route à une zone de route dans la carte photographique conformément aux informations d'objets, l'unité de commande est en outre configurée de manière à extraire la zone de route de la carte photographique conformément aux informations d'objets, et à appliquer la couleur de route à la zone de route, à l'exception des composantes de voie de circulation, en vue d'éliminer l'image de véhicules sur ladite zone de route ;
dans lequel l'unité de commande (30) est configurée de manière à appliquer la couleur de route à la zone de route conformément aux informations d'attributs.

3. Système de navigation selon la revendication 2, dans lequel la carte photographique inclut une carte photographique aérienne ou une carte photographique satellitaire.
